# FASCICULE DE BREVET EUROPEEN

(11) **EP 2 161 196 B1**
(45) Date de publication et mention de la délivrance du brevet: **13.07.2011**
(21) Numéro de dépôt: 09167727.8
(22) Date de dépôt: 12.08.2009
(51) Int. Cl.: G08G 5/00, G08G 5/04

(54) **Dispositif de visualisation pour aéronef comprenant des moyens d'affichage de trajectoires d'intrus présentant un risque de collision dans la totalité de l'espace environnant l'aéronef**
Anzeigevorrichtung für ein Flugzeug mit Anzeigemitteln für Flugbahnen von ein Kollisionsrisiko darstellenden Eindringlingen im gesamten Umgebungsraum des Flugzeugs
Display apparatus for aircraft comprising display means for displaying intruder trajectories representing a collision risk in the entire space surrounding the aircraft

(30) Priorité: 09.09.2008 FR 0804949
(43) Date de publication de la demande: 10.03.2010
(73) Titulaire: Thales, 92200 Neuilly Sur Seine (FR)
(72) Inventeur: Nouvel, Christian, 33700 Mérignac (FR); Bacabara, Corinne, 31770 Colomiers (FR); Perbet, Jean-Noël, 33320 Eysines (FR)
(74) Mandataire: Bréda, Jean-Marc

(56) Documents cités:
- WO-A-2007/002917
- GB-A- 2 373 658
- US-A- 4 293 857
- US-A1- 2002 120 391

## Description

Le domaine général de l'invention est celui des systèmes anti-collision pour aéronef et plus particulièrement celui de la présentation des informations d'anti-collision.

Pour un aéronef en vol, il est fondamental de connaître très précisément les aéronefs situés dans son environnement immédiat afin d'éviter tout risque de collision. Ce problème est particulièrement crucial dans un certain nombre d'applications où les aéronefs sont amenés à voler à basse altitude avec des conditions de visibilité qui peuvent être réduites. Historiquement, dès les années 1960-1970, une solution indépendante du contrôle de trafic aérien ou «Air Traffic Control» s'est progressivement dégagée. Cette solution est connue sous le nom de TCAS, acronyme de « Traffic alert and Collision Avoidance System ».

Aujourd'hui, plusieurs familles de TCAS ont été développées et sont utilisées:
- La première génération dite TCAS 1 fournit uniquement des alertes de type « Traffic Advisory » ou TA de proximité d'intrus, mobiles ou aéronefs présentant un risque pour l'aéronef. Le TCAS I est essentiellement utilisé dans l'aviation générale, c'est à dire le domaine des petits avions.
- Le TCAS II fournit d'une part des alertes de type TA de proximité d'intrus et d'autre part des résolutions de conflits en proposant au pilote des manoeuvres d'évitement. Le mode de fonctionnement se nomme RA pour « Resolution Advisory ». Ces manoeuvres d'évitement s'effectuent dans un plan vertical par une montée ou une descente de l'appareil. II est essentiellement utilisé dans l'aviation commerciale. Le TCAS II a été rendu obligatoire dans les années 1990 sur tous les avions de ligne.
- Le TCAS III, encore en développement, est une amélioration du TCAS II permettant en plus une résolution des conflits en mode RA dans le plan horizontal par des manoeuvres de virage à gauche ou à droite.

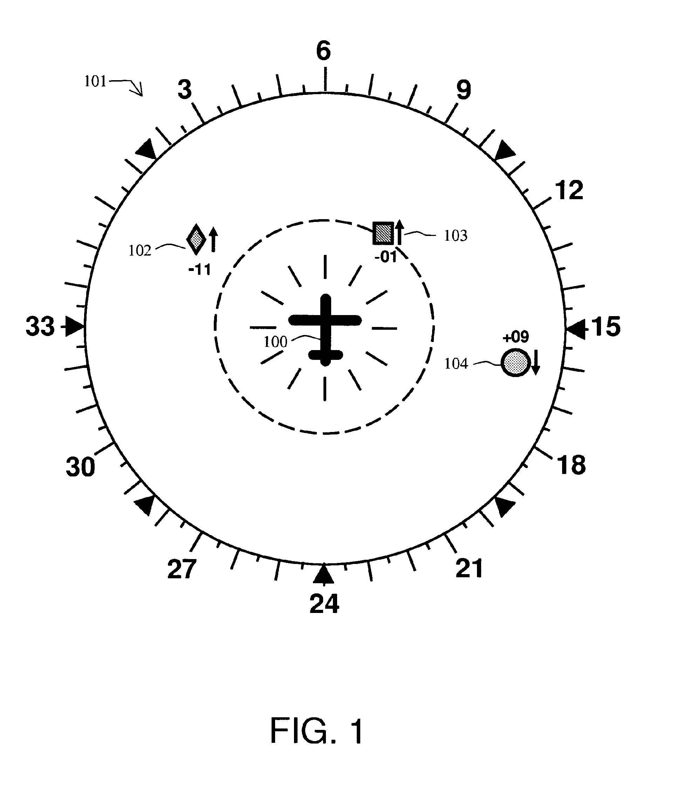

La présentation des informations TCAS au pilote peut se faire de différentes manières. A titre d'exemple, la figure 1 montre la présentation des intrus sur un écran de type ND pour Navigation Display. La présentation des intrus s'effectue dans un plan horizontal 2D relativement à l'aéronef 100 en mode dit « ROSE » pour rose des caps. L'aéronef 100 occupe le centre de la « ROSE » 101 représentée par un cercle gradué. La forme et la couleur des intrus sont différentes selon leur degré de danger associé et selon le monde de fonctionnement du TCAS.

A titre d'exemples, l'aéronef 102 est proche, à une altitude relative de 1100 pieds sous l'aéronef 100, altitude relative symbolisée par l'indication « -11 ». Cet aéronef est en montée, symbolisé par une flèche montante sur la figure 1. II est figuré par un losange plein de couleur blanche ou cyan représentant une menace en mode dit PT pour « Proximate Traffic ». Selon les conventions aéronautiques, lorsque le losange est plein, la menace est de type PT, si le losange est vide, alors la menace est de type OT, signifiant « Other Traffic ».

L'aéronef 103 est une menace en mode RA pour « Resolution Advisory ». Il est situé à une altitude relative de 100 pieds sous l'aéronef 100 et en montée. La couleur du carré qui le représente est le rouge.

L'aéronef 104 est un intrus en mode TA pour « Traffic Advisory », il est 900 pieds au-dessus de l'aéronef 100 et en descente. La couleur du cercle qui le représente est l'ambre.

Comme on peut le voir, l'interprétation des informations par le pilote est loin d'être immédiate, ce qui peut se révéler particulièrement dangereux en cas de risque de collision imminent.

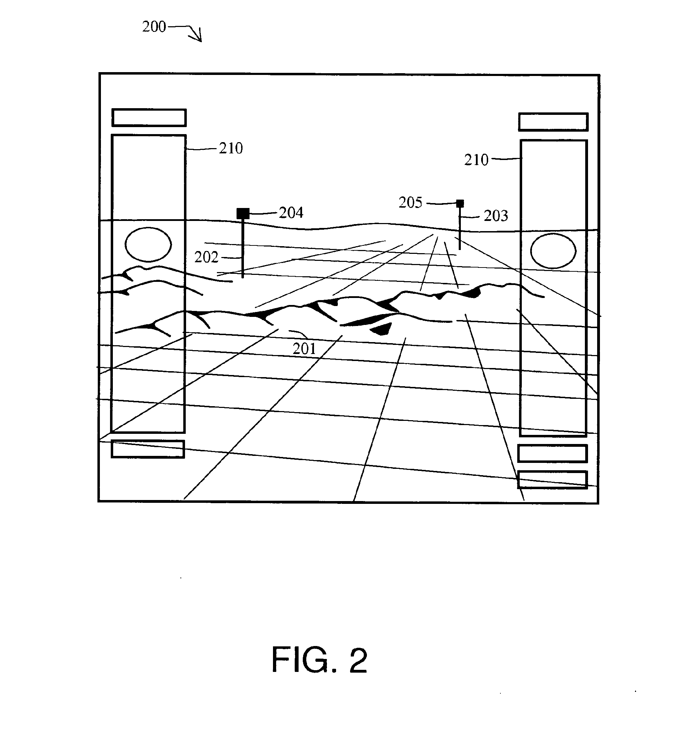

Les nouveaux systèmes de vision synthétique de type SVS (Synthetic Vision Systems) permettent actuellement aux pilotes d'avoir une représentation synthétique du monde extérieur et donc, une meilleure conscience des dangers environnants tels que les collisions avec le sol sans perte de contrôle communément appelées CFIT (Controlled Flight Into Terrain). Ces systèmes SVS permettent actuellement d'afficher en 3D un terrain synthétique ainsi que les obstacles naturels ou artificiels (immeubles...). Une amélioration de la présentation des informations fournies par le TCAS, a été proposée dans la demande de brevet d'Honeywell intitulé «Perspective View Conformal Traffic Target Display» publié sous le numéro international W02007/002917A1. La figure 2 montre un exemple de présentation des intrus sur un écran 200 de type PFD pour « Primary Flight Display » selon les dispositions de cette demande. La présentation des intrus s'effectue en 3D de manière conforme, c'est à dire positionnés à leur emplacement réel dans le paysage. Des informations complémentaires sont associées aux intrus pour aider le pilote à situer leur position, au-dessus ou en dessous d'une altitude de référence et leur degré d'éloignement obtenu grâce à une variation de grosseur des symboles. La figure 2 présente, dans une vue synthétique conforme 3D du terrain 201, le trafic aérien. Cette vue comporte également une représentation 210 des informations du PFD. Les intrus sont présentés dans le secteur frontal de l'avion. Les intrus 204 et 205 sont représentés par des carrés plus ou moins grands selon leur distance relative à l'avion. D'autres symboles sont ajoutés pour aider le pilote à interpréter l'altitude relative de l'intrus par rapport à l'avion. Ainsi, les symboles 202 et 203 représentants des mâts verticaux donnent la position et la hauteur des intrus au-dessus du sol. Cette présentation est bien adaptée aux avions de ligne qui volent relativement à haute altitude.

Bien que les nouveaux systèmes SVS permettent de mieux faire comprendre au pilote, la situation des intrus, en particulier leur type, leur positionnement, leur comportement, leurs performances..., ces nouveaux systèmes sont insuffisants pour accomplir des missions à basse altitude. En effet, les intrus sont très rares pour les avions de lignes en vol aux instruments, qui suivent des plans de vols préétablis dans des couloirs aériens stricts et sont contrôlés depuis le sol avec des radars par les organismes de la circulation aérienne. Par contre, des hélicoptères ou des petits avions peuvent voler en nombre en basse altitude, par exemple, pour participer à un sauvetage d'un grand nombre de victimes, dans le cadre d'un plan « rouge » ou dans le cadre de missions de prévention civile. Ces aéronefs peuvent arriver de face en se rapprochant, mais également par l'arrière, être situés juste en-dessous ou juste au-dessus de l'aéronef. Dans ce cas, le vol est essentiellement à vue, sans plan de vol établi et/ou hors d'une couverture radar classique. Les conditions de visibilité peuvent se dégrader en cas de vol de nuit, de soleil de face, de présence de fumée pour des missions incendie,....Les aéronefs ont aussi des trajectoires plus dynamiques et plus variées (mises en virage, montées, descentes,...) que celles des avions de ligne.

Dans ces conditions, il est particulièrement important de bien faire comprendre au pilote où sont les intrus par rapport à lui et essentiellement leurs performances comme la vitesse de rapprochement, le degré de dangerosité.... Parmi les intrus, on compte :
- Ceux qui arrivent de face en se rapprochant que l'on ne peut pas voir ou trop tardivement ;
- Ceux qui arrivent par derrière en se rapprochant et que l'on ne peut pas voir visuellement ;
- Ceux qui sont juste en dessous et/ou au-dessus et qui sont invisibles pour le pilote. Cette dernière configuration a déjà entraîné un grand nombre d'accidents mortels si le pilote choisit de monter et/ou de descendre.

Le but de l'invention est donc de présenter l'ensemble des menaces se trouvant dans l'espace environnant d'un aéronef de la façon la plus intuitive possible afin de les rendre immédiatement intelligibles au pilote.

Plus précisément, l'invention a pour objet un système de visualisation de type à vision synthétique (SVS), pour un premier aéronef, ledit système comprenant au moins des capteurs de position dudit premier aéronef, un système de détection du trafic aérien calculant la position et la dangerosité d'au moins un second aéronef présentant un risque de collision avec ledit premier aéronef à partir de données issues de capteurs de reconnaissance, un calculateur électronique, un moyen d'interface homme-machine et un écran d'affichage, le calculateur comprenant des moyens de traitement des différentes informations issues de la base de données, des capteurs et du moyen d'interface, lesdits moyens de traitement agencés de façon à fournir à l'écran d'affichage une image synthétique de l'espace entourant le premier aéronef et centré sur celui-ci, ladite image comportant au moins un premier symbole du premier aéronef et une seconde représentation de la trajectoire passée dudit second aéronef, caractérisé en ce que ladite seconde représentation comprend un ensemble de seconds symboles représentatifs des différentes positions occupées dans l'espace par le second aéronef à différents instants du passé.

Avantageusement, la seconde représentation comprend un troisième symbole représentant la trajectoire prédictive du second aéronef dans un futur proche.

De façon préférentielle, les seconds symboles ont des formes géométriques simples définies par des normes aéronautiques et sont représentés à différents instants séparés d'intervalles de temps de durée constante.

De plus, l'image synthétique selon l'invention comporte une représentation d'une zone de protection située autour du premier aéronef, ladite représentation de ladite zone de protection changeant d'aspect lorsque le second aéronef est situé à l'intérieur de cette zone ou va y pénétrer.

Avantageusement, la représentation de l'image synthétique de l'espace entourant le premier aéronef est soit une vue bidimensionnelle en forme de premier cercle centré sur le premier aéronef, la zone de protection étant représentée par un second cercle centré sur le premier cercle ; soit une vue tridimensionnelle en forme de première sphère centrée sur le premier aéronef, la zone de protection étant représentée par une seconde sphère centrée sur la première sphère.

L'invention sera mieux comprise et d'autres avantages apparaîtront à la lecture de la description qui va suivre donnée à titre non limitatif et grâce aux figures annexées parmi lesquelles :
La figure 1 représente une première présentation des informations de type TCAS selon l'art antérieur ;
La figure 2 représente une seconde présentation des informations de type TCAS selon l'art antérieur ;
La figure 3 représente le diagramme d'un système de visualisation selon l'invention ;
La figure 4 représente une première vue d'ensemble dans une représentation 2D d'un affichage de type TCAS selon l'invention ;
Les figures 5 et 6 représentent deux vues d'ensemble dans une représentation 3D d'un affichage de type TCAS selon l'invention.

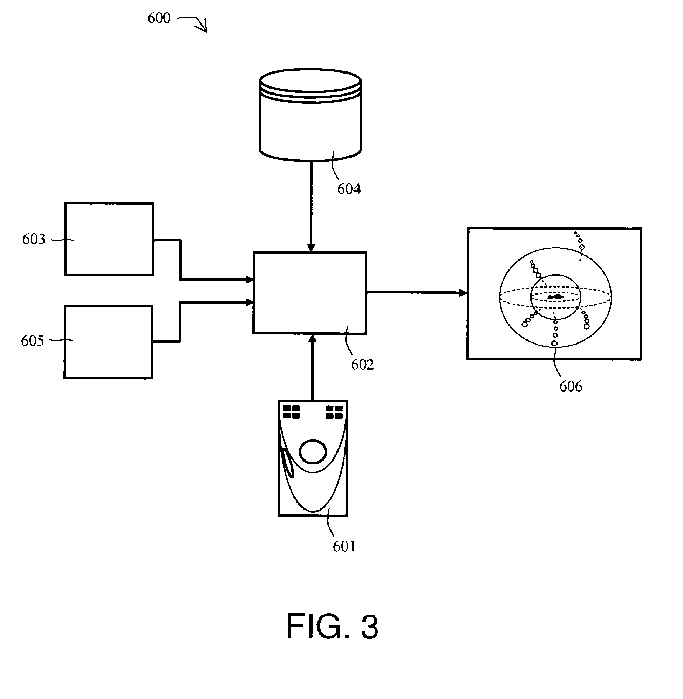

La figure 3 représente un exemple d'architecture du système, objet de l'invention, monté sur un premier aéronef. Les autres aéronefs situés dans l'espace proche de ce premier aéronef seront appelés dans la suite de la description aéronefs intrus ou plus simplement intrus.

Cet exemple de système d'affichage graphique 600 regroupe un processeur 602 configuré pour fournir à l'écran 606 les informations à afficher. Une ou plusieurs sources de données sont reliées au processeur 602. Ces sources de données incluent une base de données terrain 604 utilisée pour le tracé de la vue perspective, des capteurs de positionnement 603 de l'avion, des systèmes de détection du traffic aérien, détecteurs d'intrus 605 et des moyens de contrôle 601 pour la présentation des informations au pilote.

Ces bases de données sont généralement positionnées dans l'aéronef. Les données peuvent également provenir du sol par des moyens de transmission ou « data link ». De plus, ces données peuvent être stockées sur différents périphériques tels que des disquettes, des disques durs, des CD-ROM, des mémoires volatiles, des mémoires non volatiles, des RAM ou tous autres moyens permettant le stockage de données.

Le système d'affichage comprend également des moyens d'interface homme machine et de contrôle 601. Ces moyens sont, par exemple, comme représenté sur la figure 3, des CCD (Cursor Control Device), moyens proches des « souris » informatiques ou des postes de commande traditionnels, la commande étant effectuée grâce à des boutons, des surfaces tactiles,....

Le processeur 602 est interfacé avec des composants hardware qui fournissent un rendu graphique. Par exemple, ces composants hardware sont un ou plusieurs microprocesseurs, des mémoires, des appareils de stockage, des cartes d'interfaces ou tous autres composants standards. De plus, le processeur 602 fonctionne avec des logiciels ou « software » ou des micro-logiciels ou « firmware ». Il est capable de lire des instructions machine pour réaliser diverses tâches, calculs et fonctions de contrôle et générer les signaux à afficher et les autres données utilisés par l'écran d'affichage. Ces instructions peuvent être stockées sur des disquettes, des disques durs, des CD-ROM, des mémoires volatiles, des mémoires non volatiles, des RAM ou tous autres moyens permettant le stockage de données. Tous ces moyens sont connus de l'homme du métier.

Le processeur 602 fournit les données à afficher aux écrans d'affichage 606. Ces données comprennent :
- La position en latitude/longitude, la vitesse, le cap, ...de l'aéronef à partir de la localisation courante de l'aéronef issue des capteurs de position 603 ;
- Les bases de données terrain 604 ;
- Les positions relatives des intrus fournies par le système de détection du trafic aérien 605 ;

Le processeur 602 est configuré pour recevoir et calculer les données avion à savoir la localisation courante de l'aéronef issue des capteurs de position 603 qui peuvent être une centrale à inertie, un GPS, etc.

Basé sur les données position, le processeur 602 obtient les données terrain à partir de la base de données terrain 604. Il les envoie aux écrans d'affichage 606 pour représenter une image synthétique.

Les systèmes de détection du trafic 605 sont constitués par au moins un système TCAS. Ils peuvent être également des systèmes de type l'ADS-B (Automatic Dependent Surveillance Broadcast) ou TIS-B (Traffic Information Service Broadcast) ou un « Traffic Computer » qui fusionnent les données issues du TCAS ou de l'ADS-B. Optionnellement, les données peuvent être fournies par une liaison numérique de type « Datalink ». Ces systèmes de détection du trafic peuvent fournir la position des intrus, les types des intrus (hélicoptères, avions, autres), leur vitesse,....

Le processeur 602 est configuré pour recevoir les informations, vérifier leur cohérence, mémoriser de façon historique, par exemple, au moins les cinq dernières positions de chaque intrus, par exemple dans une file d'attente circulaire datée et prédire la trajectoire future sur un délai court. Le nombre de valeurs mémorisées est paramétrable.

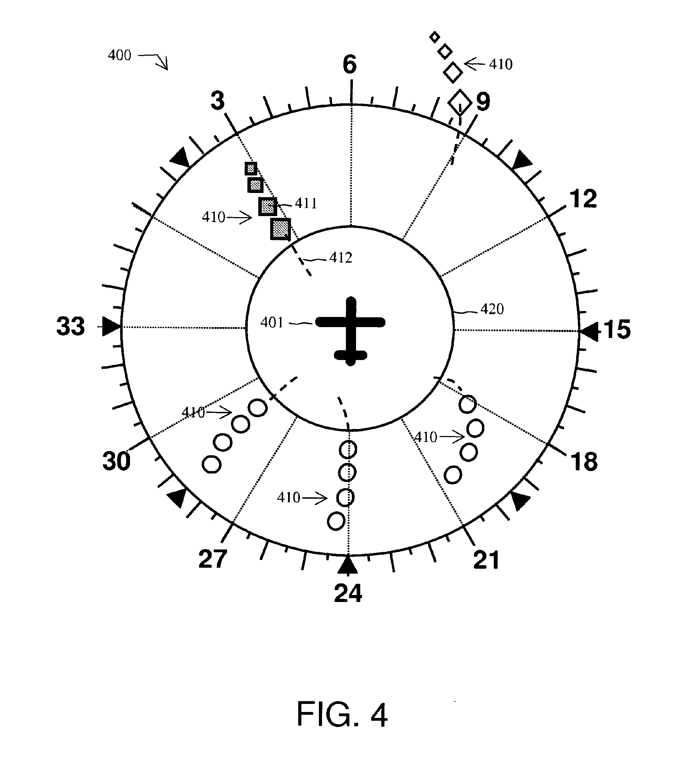

Les intrus sont présentés en vue bidimensionnelle ou tridimensionnelle comme représentés sur les figures 4, 5 et 6 sur un écran de navigation de type ND, acronyme de Navigation Display ou de type HSI, acronyme de Horizontal Situation Indicator. Les représentations selon l'invention permettent de distinguer instantanément si un aéronef intrus se rapproche ou s'éloigne. Seuls les intrus présents entre l'aéronef et une certaine durée sélectionnée soit par le pilote, soit automatiquement par le calculateur sont représentés. Cette durée est calculée à partir de la distance des intrus et de leur vitesse de rapprochement. La durée minimum réglée par le pilote ne pourra pas être inférieure à 30 secondes.

La figure 4 présente les aéronefs intrus dans une vue synthétique bidimensionnelle 400. L'image 400 est utilisée pour afficher la vue graphique qui représente tous les intrus détectés dans un secteur de 360 degrés autour de l'aéronef 401 disposé au centre de la vue. Cinq intrus sont représentés sur cette figure. Ces intrus sont représentés de manière historique et prédictive. Cette image est de type stratégique à moyen terme. Elle est visualisée sur un écran de type « Navigation Display » dit ND classique en 2D ou de type « Horizontal Situation Indicator » ou HSI.

Chaque intrus 410 se compose de deux parties : une partie dite « historique » représentée par plusieurs symboles 411 et une partie « prédictive » représentée par un symbole 412.

Les symboles 411 peuvent être des formes géométriques simples, normalisées par l'OACI (Organisation de l'Aviation Civile Internationale) : losanges, cercles, carrés dont la symbolique reprend l'esprit des normes en vigueur. Ces formes peuvent être colorées ou non. Ainsi, sur la figure 4, trois des intrus 410 sont représentés par une série de quatre cercles (logiquement TA donc en ambre), un intrus 410 est représenté par une série de quatre carrés de couleur grise (les carrés sont les RA donc rouge) et un intrus 410 est représenté par une série de quatre losanges blancs (ou cyan) losange plein ou non suivant que ce soient des PT ou des OT. Ils peuvent être représentés également par des points plus ou moins épais. Il est possible de les représenter de taille identique ou au contraire, ces symboles peuvent être de taille variable de façon à simuler le rapprochement ou l'éloignement de l'intrus du premier aéronef. Ces différents cas sont représentés sur la figure 4.

Pour chaque intrus, la position des symboles 411 est calculée par le processeur 602 relativement à la position courante de chaque aéronef intrus à différents instants. Le nombre de symboles 411 affichés est de quatre pour chaque intrus sur la figure 4. Il pourrait être de trois ou de cinq. L'écart temporel entre deux symboles 411 consécutifs est de l'ordre de 5 secondes. Le réglage du nombre maximum de symboles 411 et/ou de l'écart temporel peut être déterminé automatiquement par le processeur 602 ou par le pilote au moyen du panneau de commande ou du CCD 601. Le but est d'alléger l'image pour la rendre la plus intelligible possible au pilote.

Le symbole 412 est représenté dans notre exemple de la figure 4 par un trait en pointillés. II peut l'être par un trait plus ou moins épais. La position de ce symbole est calculée par le processeur 602 pour indiquer au pilote le chemin prévisionnel à parcourir par l'intrus pendant les quelques secondes à venir. Le filtrage utilisé par exemple pour prédire le comportement de l'intrus peut être de type linéaire dans un souci de simplicité et d'efficacité.

Le symbole 420 indique la zone de protection cylindrique autour de l'avion. Ce symbole se met à clignoter en ambre si au moins une extrémité d'un symbole prédictif 412 y pénètre.

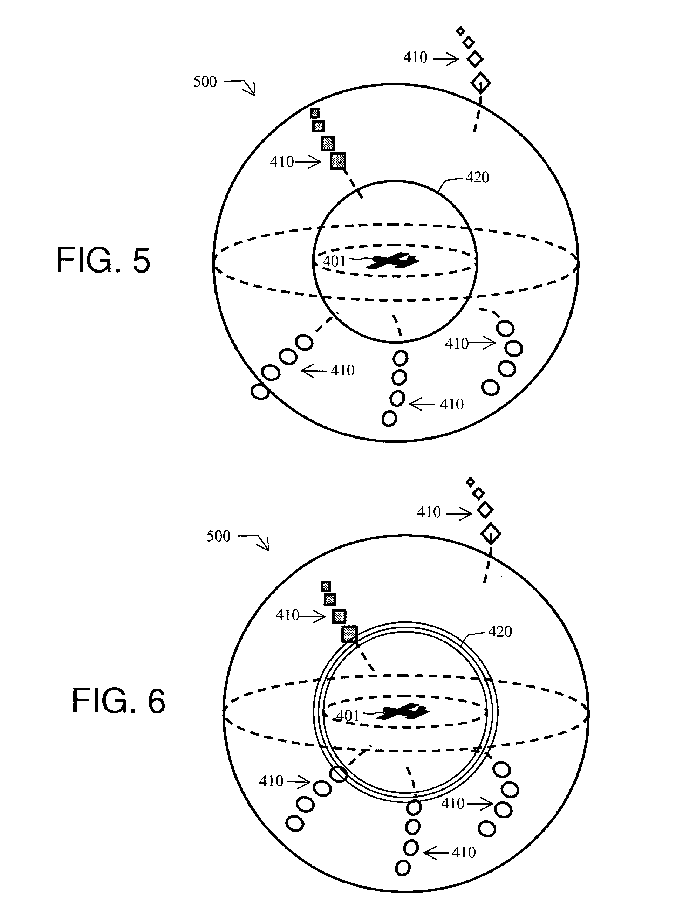

Les figures 5 et 6 représentent une image de la présente invention selon une représentation 3D dans une sphère de 4π stéradians.

L'image 500 est utilisée pour afficher la vue graphique qui représente tous les intrus 410 détectés dans un volume de 4π stéradians centré sur l'avion 401. Ces intrus sont représentés de manière historique et prédictive.

Cette image est de type stratégique à moyen terme. A titre d'exemple, elle est visualisée sur un écran de type Navigation Display dit ND en 3D.

Les symboles des intrus sont de même nature que ceux précédemment décrits pour la figure 4.

Le symbole 420 indique la zone de protection sphérique autour de l'avion. Ce symbole se met à clignoter en ambre si au moins une extrémité d'un symbole prédictif 412 y pénètre comme indiqué sur la figure 6 où le clignotement est indiqué par une série de trois cercles concentriques.

## Revendications

1. Système de visualisation de type à vision synthétique SVS (600), pour un premier aéronef, ledit système comprenant au moins des capteurs de position dudit aéronef (603), un système de détection du trafic aérien (605) calculant la position et la dangerosité d'au moins un second aéronef présentant un risque de collision avec ledit premier aéronef à partir de données issues de capteurs de reconnaissance, un calculateur électronique (602), un moyen d'interface homme-machine (601) et un écran d'affichage (606), le calculateur comprenant des moyens de traitement des différentes informations issues de la base de données, des capteurs et du moyen d'interface, lesdits moyens de traitement agencés de façon à fournir à l'écran d'affichage une image synthétique (400, 500) de l'espace entourant le premier aéronef et centré sur celui-ci, ladite image comportant au moins un premier symbole (401) du premier aéronef et une seconde représentation de la trajectoire passée dudit second aéronef (410) comprenant un ensemble de seconds symboles (411) représentatifs des différentes positions occupées dans l'espace par le second aéronef à différents instants du passé,
l'image synthétique comportant une représentation (420) d'une zone de protection située autour du premier aéronef.

2. Système de visualisation selon la revendication 1, **caractérisé en ce que** la seconde représentation comprend un troisième symbole (412) représentant la trajectoire prédictive du second aéronef dans un futur proche.

3. Système de visualisation selon la revendication 1, **caractérisé en ce que** les seconds symboles (411) ont des formes géométriques simples et des couleurs définies par des normes aéronautiques.

4. Système de visualisation selon la revendication 1, **caractérisé en ce que** les seconds symboles (411) sont représentés à différents instants séparés d'intervalles de temps de durée constante.

5. Système de visualisation selon la revendication 1, **caractérisé en ce que** la représentation de ladite zone de protection change d'aspect lorsque le second aéronef est situé à l'intérieur de cette zone ou va se situer à l'intérieur de cette zone.

6. Système de visualisation selon l'une des revendications 1 à 5, **caractérisé en ce que** la représentation de l'image synthétique de l'espace entourant le premier aéronef est une vue bidimensionnelle (400) en forme de premier cercle centré sur le premier aéronef, la zone de protection étant représentée par un second cercle centré sur le premier cercle.

7. Système de visualisation selon l'une des revendications 1 à 5, **caractérisé en ce que** la représentation de l'image synthétique de l'espace entourant le premier aéronef est une vue tridimensionnelle (500) en forme de première sphère centrée sur le premier aéronef, la zone de protection étant représentée par une seconde sphère centrée sur la première sphère.

## Claims

1. A synthetic vision type viewing system SVS (600) for a first aircraft, said system comprising at least sensors for the position of said aircraft (603), a system for detecting air traffic (605) for calculating the position and the danger posed by at least one second aircraft presenting a risk of collision with said first aircraft based on data originating from recognition sensors, an electronic calculator (602), a man-machine interface means (601) and a display screen (606), the calculator comprising means for processing the different information originating from the database, the sensors and the interface means, said processing means being arranged so as to provide the display screen with a synthetic image (400, 500) of the space surrounding said first aircraft and centred thereon, said image comprising at least one first symbol (401) of said first aircraft and a second representation of the past trajectory of said second aircraft (410), which comprises a set of second symbols (411) representing the various positions occupied in the space by said second aircraft at different times in the past, said synthetic image comprising a representation (420) of a protection zone situated around said first aircraft.

2. The viewing system according to claim 1, **characterised in that** the second representation comprises a third symbol (412) representing the predictive trajectory of the second aircraft in the near future.

3. The viewing system according to claim 1, **characterised in that** the second symbols (411) have simple geometric shapes and colours defined by aeronautical standards.

4. The viewing system according to claim 1, **characterised in that** the second symbols (411) are shown at different times separated by time intervals of constant duration.

5. The viewing system according to claim 1, **characterised in that** the representation of said protection zone changes appearance when the second aircraft is located inside this zone or will be located inside this zone.

6. The viewing system according to any one of claims 1 to 5, **characterised in that** the representation of the synthetic image of the space surrounding the first aircraft is a two-dimensional view (400) in the form of a first circle centred on the first aircraft, the protection zone being represented by a second circle centred on the first circle.

7. The viewing system according to any one of claims 1 to 5, **characterised in that** the representation of the synthetic image of the space surrounding the first aircraft is a three-dimensional view (500) in the form of a first sphere centred on the first aircraft, the protection zone being represented by a second sphere centred on said first sphere.

## Patentansprüche

1. Anzeigesystem mit synthetischem Sichtsystem SVS (600) für ein erstes Luftfahrzeug, wobei das System wenigstens Folgendes umfasst: Sensoren für die Position des Luftfahrzeugs (603), ein System zum Erkennen vom Flugverkehr (605), das die Position und die Gefährlichkeit eines wenigstens zweiten Luftfahrzeugs, das ein Kollisionsrisiko mit dem ersten Luftfahrzeug darstellt, auf der Basis von Daten von Erkennungssensoren berechnet, einen elektronischen Rechner (602), ein Mensch-Maschine-Schnittstellenmittel (601) und einen Anzeigeschirm (606), wobei der Rechner Mittel zum Verarbeiten der verschiedenen von der Datenbank, den Sensoren und des Schnittstellenmittels kommenden Informationen umfasst, wobei die Verarbeitungsmittel so ausgelegt sind, dass sie ein synthetisches Bild (400, 500) des Raums um das erste Luftfahrzeug herum zu dem Anzeigeschirm, und auf diesem zentriert, liefern, wobei das Bild wenigstens ein erstes Symbol (401) des ersten Luftfahrzeugs und eine zweite Darstellung der vergangenen Flugbahn des zweiten Luftfahrzeugs (410) umfasst, umfassend einen Satz von zweiten Symbolen (411), die die verschiedenen von dem zweiten Luftfahrzeug in dem Raum zu verschiedenen Zeiten in der Vergangenheit eingenommenen Positionen repräsentiert, wobei das synthetische Bild eine Darstellung (420) einer Schutzzone um das erste Luftfahrzeug herum umfasst.

2. Anzeigesystem nach Anspruch 1, **dadurch gekennzeichnet, dass** die zweite Darstellung ein drittes Symbol (412) umfasst, dass die vorhergesagte Flugbahn des zweiten Luftfahrzeugs in der nahen Zukunft repräsentiert.

3. Anzeigesystem nach Anspruch 1, **dadurch gekennzeichnet, dass** die zweiten Symbole (411) einfache geometrische Formen und Farben haben, die durch aeronautische Normen definiert werden.

4. Anzeigesystem nach Anspruch 1, **dadurch gekennzeichnet, dass** die zweiten Symbole (411) zu verschiedenen Zeitpunkten getrennt durch Zeitintervalle konstanter Dauer dargestellt werden.

5. Anzeigesystem nach Anspruch 1, **dadurch gekennzeichnet, dass** sich das Aussehen der Darstellung der Schutzzone ändert, wenn sich das zweite Luftfahrzeug innerhalb dieser Zone befindet oder sich innerhalb dieser Zone befinden wird.

6. Anzeigesystem nach einem der Ansprüche 1 bis 5, **dadurch gekennzeichnet, dass** die Darstellung des synthetischen Bildes des Raums um das erste Luftfahrzeug eine zweidimensionale Ansicht (400) in Form eines ersten auf dem ersten Luftfahrzeug zentrierten Kreises ist, wobei die Schutzzone durch einen auf dem ersten Kreis zentrierten zweiten Kreis dargestellt wird.

7. Anzeigesystem nach einem der Ansprüche 1 bis 5, **dadurch gekennzeichnet, dass** die Darstellung des synthetischen Bildes des Raums um das erste Luftfahrzeug eine dreidimensionale Ansicht (500) in Form einer ersten auf dem ersten Luftfahrzeug zentrierten Kugel ist, wobei die Schutzzone durch eine zweite auf der ersten Kugel zentrierte zweite Kugel dargestellt wird.
